# EUROPÄISCHE PATENTANMELDUNG

(11) **EP 1 233 224 A2**
(43) Veröffentlichungstag der Anmeldung: **21.08.2002**
(21) Anmeldenummer: 02000553.4
(22) Anmeldetag: 10.01.2002
(51) Int. Cl.: F16L 11/118, F16L 11/12

(54) **Elastomerschlauch mit längsangeordneten Rippen für Kraftfahrzeuge**

(30) Priorität: 07.02.2001 DE 10105829; 20.02.2001 DE 10107938
(71) Anmelder: Mündener Gummiwerk GmbH, 34346 Hann. Münden (DE)
(72) Erfinder: Möller, Thilo, 34346 Hann. Münden (DE)
(74) Vertreter: WALTHER, WALTHER & HINZ Patentanwälte

(57) **Zusammenfassung**

Gegenstand der Erfindung ist ein Elastomerschlauch für Kraftfahrzeuge, z. B. einen Turboladerschlauch, Kältemittelschlauch, Kühlwasserschlauch oder Heizungsschlauch der Klimaanlage mit mindestens einer, vorzugsweise mehrerer sich über die Länge des Schlauches (1) erstreckende gegenüber der Oberfläche des Schlauches erhabene Rippen (10).

## Beschreibung

Die Erfindung betrifft einen Elastomerschlauch für Kraftfahrzeuge, z. B. einen Turboladerschlauch, Kältemittelschlauch der Klimaanlage, Kühlwasserschlauch oder Heizungsschlauch.

Im Motorraum eines Kraftfahrzeuges wird der Platz auf Grund der Vielzahl der Zusatzaggregate immer geringer. Infolgedessen kommt es immer häufiger dazu, dass die Schläuche aneinander oder an benachbarten Bauteilen reiben, wobei dies zu einem erhöhten Verschleiß bis hin zum Ausfall wegen Undichtigkeit an den Schläuchen führt.
Um den Verschleiß zu mindern, ist bereits bekannt, an die Schläuche im Bereich solcher Berührungsstellen sogenannte Abstands- oder Verschlussnoppen aufzubringen. Elastomerschläuche werden üblicherweise kontinuierlich extrudiert, so dass das Aufbringen zusätzlicher Noppen, beispielsweise durch diskontinuierliches Spritzgießen, einen zusätzlichen Arbeitsgang mit dem entsprechenden Aufwand an Zeit und Geld, insbesondere durch den Einsatz eines zusätzlichen Werkzeuges, erfordert. Des Weiteren ist bekannt, Schläuche aus Elastomer mit geflochtenen Schutzschläuchen aus den unterschiedlichsten Materialien, z. B. einem Polyamid-Gewebe als Verschleissschutz zu umgeben.

Darüber hinaus ist zur Verschleissminderung bekannt, auf einen extrudierten Elastomerschlauch einen sogenannten Schrumpfschlauch aufzubringen. Die Verwendung derartiger Schrumpfschläuche zur Verschleißminderung von Elastomerschläuchen im Fahrzeug ist mit verschiedenen Nachteilen behaftet; so ist insbesondere bekannt, dass Schrumpfschläuche, wenn diese eine leichte Beschädigung an ihrer Oberfläche aufweisen, beim Aufschrumpfen auf den Elastomerschlauch unmittelbar weiterreißen und daher der Arbeitsgang gegebenenfalls wiederholt werden muss. Des Weiteren bestehen Schrumpfschläuche aus thermoplastischem Material, wobei Thermoplaste nicht so hoch temperaturfest sind, wie Elastomere, wobei bei höherer Temperatur die Gefahr der Zerstörung bzw. des unkontrollierten Weiterschrumpfens besteht. Das heißt, der Einsatzbereich derartiger mit Schrumpfschläuchen versehener Elastomerschläuche ist durchaus begrenzt.

Der Erfindung liegt daher die Aufgabe zu Grunde, einen Elastomerschlauch für Kraftfahrzeuge, z. B. einen Turboladerschlauch bereitzustellen, der eine verschleißfeste Oberfläche zeigt, die ein Durchscheuern dieses Schlauches bei Berührung mit anderen beweglichen Teilen im Motorraum, insbesondere mit benachbarten Schläuchen, verhindert, ohne dass der Einsatzbereich oder die Funktion in irgendeiner Weise eingeschränkt wird.

Zur Lösung dieser Aufgabe wird erfindungsgemäß die Anordnung mindestens einer sich über die Länge des Elastomerschlauches, der beispielsweise aus Silikonkautschuk, Chloropren, Epichlorhydrinkautschuk, Polyacrylatkautschuk, EPDM (Etylen/Propylen/Diem-Kautschuk), Ethylenacrylat-kautschuk oder Acylatkautschuk bestehen kann, gegenüber der Oberfläche des Schlauches erhabene Rippe vorgeschlagen. Durch die Anordnung einer einzelnen Rippe derart auf dem Schlauch, dass diese Rippe im Bereich des benachbarten beweglichen Teiles liegt, so dass dieses nicht unmittelbar an dem Schlauch, sondern an der Rippe scheuert, wird eine erhebliche Verschleißminderung erreicht. Vorteilhafterweise sind allerdings auf dem Schlauch mehrere derartige Rippen umfangsverteilt angeordnet. Durch die Anordnung mehrerer derartiger Rippen auf dem Umfang des Schlauches wird allerdings eine "Rundumsicherheit" des Schlauches gegen Abscheuern erzielt. Der Vorteil der Verwendung lediglich einer Rippe gegenüber einer Vielzahl von Rippen besteht in der Materialersparnis. Der Vorteil einer Rippe, die sich längs über den gesamten Schlauch erstreckt, gegenüber den aus dem Stand der Technik bekannten Noppen ist darin zu sehen, dass auch bei Verschiebung des Schlauches mindestens auf gleicher Höhe noch ein Verschleißschutz gegeben ist.

Im Einzelnen ist vorgesehen, dass eine derartige Rippe, die sich vorteilhaft parallel zur Längsachse des Schlauches auf der Oberfläche des Schlauches erstreckt, aus demselben oder einem anderen abriebfesten Elastomer, z. B. FPM (Fluorkautschuk) besteht. Beispielsweise ist dieses Elastomer FPM verschleißfest, um eine lange Lebensdauer des Schlauches zu gewährleisten. Bei der Verwendung von FPM besteht der zusätzliche Vorteil, dass dieses Elastomer schwer entflammbar ist. Insbesondere bei der Anordnung einer Vielzahl von Rippen auf dem Umfang des Schlauches, wobei die Rippen im Rippengrund untereinander durch eine dünne Schicht aus demgleichen Material wie die Rippen verbunden sind, wird somit erreicht, dass der Schlauch insgesamt schwer entflammbar ist.

Zusammenfassend ergeben sich durch die Anordnung,insbesondere mehrerer Rippen parallel zur Längsachse des Schlauches, auf dem Schlauch folgende weitere Vorteile:
In Abhängigkeit von der Wahl des Werkstoffes für die Rippen ergibt sich erhöhte Medien - insbesondere Ölbeständigkeit dieses Schlauches;
dies dann, wenn - wie zuvor beschrieben - die einzelnen Rippen im Rippengrund durch eine Schicht aus dem Rippenmaterial miteinander in Verbindung stehen;
die Rippen beeinträchtigen nicht übermäßig die Flexibilität des Schlauches; es besteht eine feste Verbindung zwischen dem eigentlichen Elastomerschlauch und den Rippen, da die Rippen im Wege der Extrusion auf die Oberfläche des Schlauches aufgebracht werden;
vorteilhaft gegenüber der Verwendung von Schrumpfschläuchen ist ebenfalls, dass sich auf der Innenseite von Krümmungen keine Falten bilden, wie dies beim Aufschrumpfen von Schläuchen auf den Elastomerschlauch der Fall ist;
durch die Anordnung von Rippen auf der Oberfläche des Elastomerschlauches wird darüber hinaus die Formstabilität, insbesondere bei Unterdruckbeanspruchung erhöht, d. h., es besteht weniger die Gefahr, dass sich bei Unterdruck der Schlauch zusammenzieht;
darüber hinaus bewirken die Rippen eine verminderte Ausdehnung bei Druckpulsbeanspruchung, da in diesem Fall die Rippen, ähnlich bei der Unterdruckbeanspruchung der Versteifung dienen;
die Rippen bewirken darüber hinaus ein gutes Rückstellverhalten nach einer Deformation des Schlauchens;
auch wird durch die Anordnung von Rippen auf dem Umfang des Schlauches die Verformungsarbeit bei Druckpulsbeanspruchung höher, was bedeutet, dass die Geräuschentwicklung vermindert ist, da die Schwingungsamplituden geringer werden;
es hat sich ebenfalls herausgestellt, dass derartige mit Rippen versehene Schläuche während der Produktion und später bei der Montage besser in der Hand liegen.

Nach einem weiteren vorteilhaften Merkmal der Erfindung ist vorgesehen, so dass der Elastomerschlauch im Endbereich eine radialverlaufende Nut zur Aufnahme einer Schlauchschelle aufweist, wobei die Tiefe der Nut maximal der Höhe der Rippe entspricht. Durch die Ausfräsung einer Nut für die Schelle wird lediglich Material in Höhe der Rippe abgenommen, dass einerseits eine Sicherung der Schelle gegen axiale Verschiebung gewährleistet ist, wobei andererseits sichergestellt ist, dass der eigentliche Schlauch hierbei nicht beschädigt wird. Vorteilhaft kann zusätzlich die Schlauchschelle durch die Rippen gegen Verdrehung gesichert sein, was im einfachsten Fall durch eine formschlüssige Verbindung der Schlauchschelle mit den Rippen erfolgt. Vorteilhaft hierbei ist, dass das Schloss der Schlauchschelle hierbei in einer besonderen Lage fixiert wird, um die Montage zu erleichtern. Auch hier gilt wiederum, dass allein dadurch, dass lediglich mit Hilfe der Rippen Maßnahmen gegen eine Verdrehung der Schlauchschelle getroffen werden, der Schlauch als solcher selbst unberührt bleibt, und damit auch keine Gefahr der Beschädigung des eigentlichen Schlauches besteht.

Anhand der Zeichnungen wird die Erfindung nachstehend beispielshaft näher erläutert.
- Figur 1: zeigt einen Schlauch perspektivischer Darstellung mit mehreren auf dem Umfang des Schlauches verteilt angeordneten Rippen;
- Figur 2: zeigt eine Ausführungsform mit drei auf dem Umfang des Schlauches angeordneten Rippen;
- Figur 3: zeigt eine Ausführungsform mit einer auf dem Umfang des Schlauches angeordneten Rippe;
- Figur 4: zeigt schematisch eine Verdrehsicherung für die Schlauchschelle;
- Figur 5: zeigt eine andere Ausführungsform einer Verdrehsicherung für die Schlauchschelle;
- Figur 6: zeigt eine weitere Ausführungsform einer Verdrehsicherung für die Schlauchschelle.

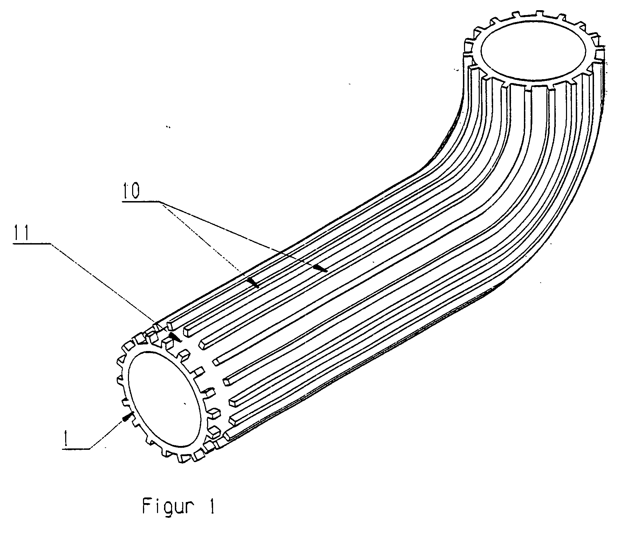

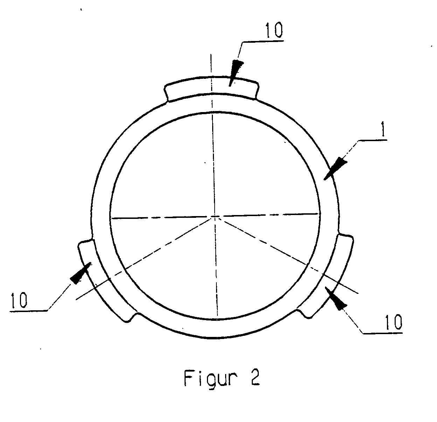

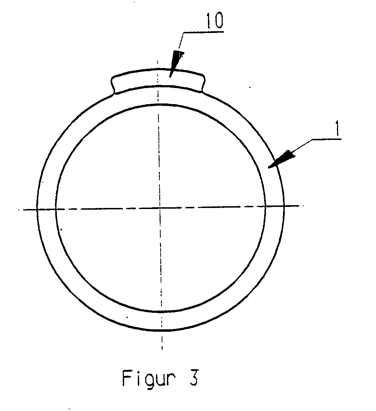

Aus Fig. 1 ist schematisch ein gebogener Elastomerschlauch, beispielsweise als Turboladerschlauch, mit dem Bezugszeichen 1 erkennbar. Dieser Elastormerschlauch, der beispielsweise aus AEM (Ethylen-Acylatkautschuk), Silikonkautschuk, Chloropren, Epichlorhydrinkautschuk hergestellt ist, besitzt auf seiner Oberfläche umfangsverteilt mehrere erhabene, d. h. überstehende, Rippen 10, die sich parallel zur Mittellängsachse des Schlauches auf dem Schlauch erstrecken. Zur Aufnahme einer Schlauchschelle sind die Rippen 10 im Endbereich des Schlauches 1 ausgefräst, wobei die Höhe der Fräsung maximal der Höhe der Rippen entspricht, so dass der eigentliche Schlauch nicht beschädigt ist. Vor und hinter der Schlauchschelle bleibt etwas von den Rippen stehen, so dass sich eine Sicherung gegen axiale Verschiebung von jeder Seite ergibt. Denkbar sind allerdings auch andere Ausführungsformen für die Anordnung von Rippen auf dem Schlauch, wie sich dies aus den Fig. 2 und 3 ergibt, wobei in Fig. 2 der Schlauch 1 drei auf dem Umfang verteilt angeordnete Rippen 10 aufweist, die allerdings einen breiteren Rücken aufweisen, als die Rippen gemäß Fig. 1; eine weitere Ausführungsform ergibt sich aus Fig. 3 mit lediglich einer Rippe 10 auf dem Schlauch 1, wobei ein solcher Schlauch im Motorraum derart angeordnet sein muss, dass diese Rippe tatsächlich auch mit dem benachbarten Bauteil in Berührung kommt, um ein Durchscheuern an einer anderen Stelle des Schlauches zu verhindern.

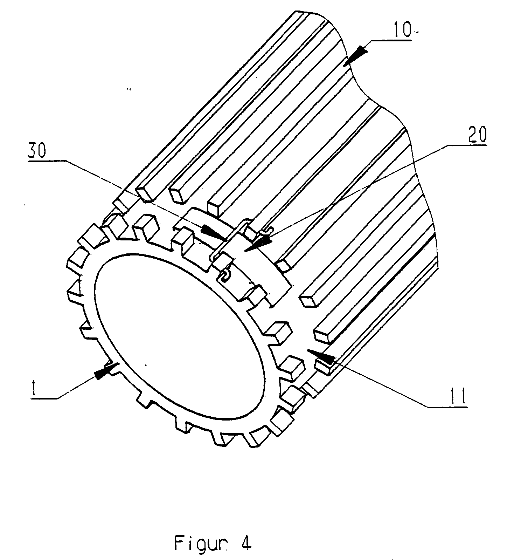

Zur Verdrehsicherung der Schlauchschelle 20 auf dem Schlauch 1 mit den Rippen 10 sind mehrere Varianten denkbar, wie sich dies aus den Fig. 4 bis 6 ergibt. So ist in Fig. 4 eine Verklammerung mit Hilfe einer Klammer 30 vorgesehen, durch die die Enden auf die in der Nut einliegenden Schlauchschelle gepresst werden, so dass die Schlauchschelle eingeklemmt ist. Darüber hinaus wird eine gewisse Verdrehsicherung auch dadurch erhalten, dass die Klammer unmittelbar auf der Schlauchschelle sitzt, und diese quasi 'formschlüssig' in Eingriff mit der Schlauchschelle steht.

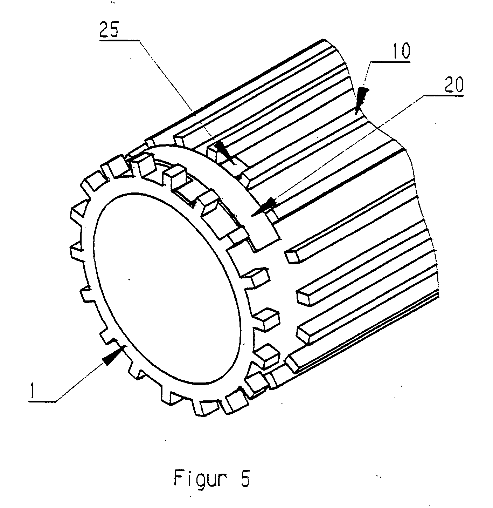

Bei der Variante gemäß Fig. 5 sind an der Schlauchschelle 20 Nasen 25 angeordnet, die in den Raum zwischen zwei Rippen eingreifen, um hierdurch eine Verdrehsicherung bereitzustellen.

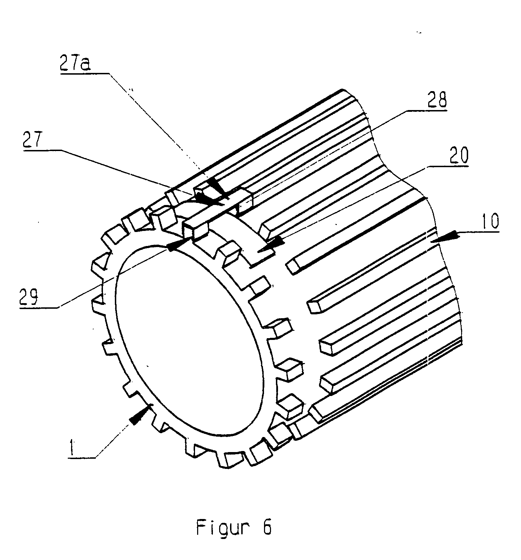

Bei der Variante gemäß Fig. 6 ist eine Lasche 27 vorgesehen, die endseitig jeweils eine Klammer 28, 29 aufweist, wobei diese beiden Klammern 28, 29 durch einen Steg 27a verbunden sind. Durch die Klammern 28, 29 erfolgt durch ein Zusammenquetschen eine kraftschlüssige Verbindung mit den Rippen bzw. Rippenteilen, wobei der Steg 27a durch Aufliegen auf der Oberfläche der Schelle quasi durch Formschluss ein Verdrehen der Schelle verhindert.

## Patentansprüche

1. Elastomerschlauch für Kraftfahrzeuge, z. B. einen Turboladerschlauch, Kältemittelschlauch der Klimaanlage, Kühlwasserschlauch oder Heizungsschlauch,
**gekennzeichnet durch**
mindestens eine, vorzugsweis mehrere sich über die Länge des Schlauches (1) erstreckende, gegenüber der Oberfläche des Schlauches erhabene Rippen (10).

2. Elastomerschlauch für Kraftfahrzeuge nach Anspruch 1,
**dadurch gekennzeichnet,**
**dass** der Schlauch (1) mehrere Rippen (10) umfangsverteilt auf dem Schlauch (1) aufweist.

3. Elastomerschlauch für Kraftfahrzeuge nach Anspruch 2,
**dadurch gekennzeichnet,**
**dass** die Rippen (10) im Rippengrund durch eine insbesondere dünne Schicht aus dem Material der Rippen (40) miteinander verbunden sind.

4. Elastomerschlauch für Kraftfahrzeuge nach Anspruch 1 oder 2,
**dadurch gekennzeichnet,**
**dass** die Rippe (10) aus einem Elastomer besteht.

5. Elastomerschlauch für Kraftfahrzeuge nach Anspruch 1 oder 2,
**dadurch gekennzeichnet,**
**dass** Rippe (10) sich parallel zur Längsachse des Schlauches (1) auf der Oberfläche des Schlauches erstreckt.

6. Elastomerschlauch für Kraftfahrzeuge nach Anspruch 4,
**dadurch gekennzeichnet,**
**dass** das Elastomer verschleißfest ist.

7. Elastomerschlauch für Kraftfahrzeuge nach Anspruch 4,
**dadurch gekennzeichnet,**
**dass** das Elastomer schwer entflammbar ist.

8. Elastomerschlauch für Kraftfahrzeuge nach Anspruch 1 oder 2,
**dadurch gekennzeichnet,**
**dass** der Elastormerschlauch (1) im Endbereich eine radial verlaufende Nut (20) zur Aufnahme einer Schlauchschelle aufweist, wobei die Tiefe der Nut (20) max. der Höhe der Rippe (10) entspricht.
